# EUROPEAN PATENT APPLICATION

(11) **EP 1 914 046 A1**
(43) Date of publication of application: **23.04.2008**
(21) Application number: 07118155.6
(22) Date of filing: 09.10.2007
(51) Int. Cl.: B26D 3/08, B29C 44/56

(54) **Process for making a flexible foam sheet**

(30) Priority: 20.10.2006 GB 0620898
(71) Applicant: Dunlop Latex Foam Limited, HG3 1JL Yorkshire Harrogate (GB)
(72) Inventor: WILKINSON, Paul John, Harrogate, Yorkshire HG3 1JL (GB)
(74) Representative: Smithson, Robert Alan

(57) **Abstract**

A process for producing a flexible foam sheet (102a) from a flexible foam block (102) comprising the steps of:
forming at least one cut in a first wall (104) of the flexible foam block (102), the at least one cut extending from the first wall (104) toward a second wall (106), the second wall being generally opposite the first wall (104);
forming at least one cut in the second wall (106) of the flexible foam block (102), the at least one cut extending from the second wall (106) toward the first wall (104);

thereby forming a concertina of flexible foam sheet (102a).

## Description

The present invention relates to a process for producing a flexible foam sheet, a flexible foam sheet made from such a process and roll of flexible foam sheet made from such a process.

Flexible foams, such as flexible polyurethane foam or flexible latex foam have a wide variety of uses in everyday life. In view of the wide variety of uses, it is important to be able to supply flexible foams in a variety of physical forms such as blocks of varying shapes and sizes, pillows and sheets.

Flexible foams are traditionally formed in moulded blocks. It is possible to make flexible foam sheets in the moulding process by moulding the sheet on a moving belt which passes under a height adjustable roller. However, this can lead to the flexible foam having density problems and also this method is not suitable for some flexible foam moulding techniques, such as the Talalay process.

Therefore, usually, if the flexible foam is required as an extended sheet, the sheet is produced by cutting from a moulded block of flexible foam. Two known ways to produce flexible foam sheets from flexible foam block are as follows.

Firstly, it is known to produce flexible foam blocks that are cylindrical by foaming the block in a "sleeve". This cylindrical block is then rotated about its elongate axis and a sheet of flexible foam is then "shaved" off the circumferential outer edge by a radially moveable blade.

This method of producing a flexible foam sheet suffers the disadvantage that the cylindrical block is generally oblate so there is some wastage. Also, the dimensions of the sheet are limited by the size of the blade.

An alternative manner to form a flexible foam sheet from a flexible foam block is to make a very long block, for example, a 60 metre long block, and manipulate the block into a ring such that the two opposite ends of the block meet. The two ends of the block are then glued together and the ring mounted to rotate about a point central to the ring. A blade is then used to "shave" an outer edge of the ring as it rotates, thus producing a flexible foam sheet. A problem with this process is the size required to form the ring and the means to rotate a ring of such a size.

It is an object of aspects of the present invention to address the above or other problems.

According to a first aspect of the present invention there is provided a process for producing a flexible foam sheet from a flexible foam block comprising the steps of:
forming at least one cut in a first wall of the flexible foam block, the at least one cut extending from the first wall toward a second wall, the second wall being generally opposite the first wall;
forming at least one cut in the second wall of the flexible foam block, the at least one cut extending from the second wall toward the first wall;
thereby forming a concertina of flexible foam sheet.

Preferably, the at least one cut in the first wall and the at least one cut in the second wall are substantially parallel with each other.

Preferably, the flexible foam block has a generally constant cross section from the first wall to the second wall. Preferably, the flexible foam block is a parallelepiped. Preferably, the flexible foam block is a rectangular parallelepiped. Preferably, the flexible foam block is generally cuboidal in shape.

Preferably the process comprises forming a plurality of cuts into the first wall of the flexible foam block. Preferably the process comprises forming a plurality of cuts into the second wall of the flexible foam block.

Preferably, the plurality of cuts in the first wall are interspersed between the plurality of cuts in the second wall. Preferably the plurality of cuts in the first wall are generally parallel with each other. Preferably, the plurality of cuts in the second wall are generally parallel with each other.

In a preferred embodiment, the plurality of cuts in the first wall and the plurality of cuts in the second wall are generally parallel with each other.

Preferably, the at least one cut in the first wall is generally perpendicular with the first wall. Preferably, the at least one cut in the second wall is generally perpendicular with the second wall.

Preferably, the plurality of cuts in the first wall are generally perpendicular with the first wall. Preferably, the plurality of cuts in the second wall are generally perpendicular with the second wall.

Preferably, the at least one cut in the first wall extends more than 50% toward the second wall, more preferably, more than 70%, more preferably more than 90% and most preferably, more than 95%. Preferably, the at least one cut in the second wall extends more than 50% toward the first wall, more preferably, more than 70%, more preferably more than 90% and most preferably, more than 95%.

Preferably, the at least one cut in the first wall terminates between about 1mm and 20mm before the second wall, more preferably between about 2mm and 10mm before the second wall and most preferably about 5mm from the second wall. Preferably, the at least one cut in the second wall terminates between about 1mm and 20mm before the first wall, more preferably between about 2mm and 10mm before the first wall and most preferably about 5mm from the first wall.

Preferably, the distance away from the second wall that the at least one cut in the first wall terminates is about a half of the depth of the flexible foam sheet being produced. Preferably, the distance away from the first wall that the at least one cut in the second wall terminates is about a half of the depth of the flexible foam sheet being produced.

By the term flexible foam it is meant any foam substance that is flexible. Examples of suitable flexible foams include but are not restricted to flexible polyurethane foam and latex foam. The flexible polyurethane foam may be flexible polyester foam or flexible polyether foam, for example.

Preferably, the flexible foam block is a moulded flexible foam block, preferably made by the Talalay process.

Preferably, the at least cut is formed by a blade. Preferably, the blade is any blade able to make accurate horizontal cuts. Preferably, the blade is between about 0.1mm and 1mm thick, more preferably between about 0.3mm and 0.8mm thick. Preferably, the blade is between about 1mm and 10mm deep, more preferably between about 1mm and 5mm. Preferably, the blade is a continuous blade.

Preferably, the at least one cut is formed using a cutting machine, such as a computer controlled profile cutting machine.

The process may include the further step of gluing together adjacent panels of the flexible foam sheet. The process may include the further step of covering the glue layer with a non-stick compound such as, for example, silicone.

According to a second aspect of the present invention there is provided a flexible foam sheet, the flexible foam sheet being produced from a flexible foam block by the following process steps:
forming at least one cut in a first wall of the flexible foam block, the at least one cut extending from the first wall toward a second wall, the second wall being generally opposite the first wall;
forming at least one cut in the second wall of the flexible foam block, the at least one cut extending
from the second wall toward the first wall;
thereby forming a concertina of flexible foam sheet.

According to a third aspect of the present invention there is provided a roll of flexible foam sheet, the flexible foam sheet being produced from a flexible foam block by the following process steps:
forming at least one cut in a first wall of the flexible foam block, the at least one cut extending from the first wall toward a second wall, the second wall being generally opposite the first wall;
forming at least one cut in the second wall of the flexible foam block, the at least one cut extending from the second wall toward the first wall;
thereby forming a concertina of flexible foam sheet and then manipulating the flexible foam sheet into a roll.

According to a further aspect of the present invention there is provided the use of a flexible foam block to form a flexible foam sheet by the following process steps:
forming at least one cut in a first wall of the flexible foam block, the at least one cut extending from the first wall toward a second wall, the second wall being generally opposite the first wall;
forming at least one cut in the second wall of the flexible foam block, the at least one cut extending
from the second wall toward the first wall;
thereby forming a concertina of flexible foam sheet.

According to the further aspect of the present invention there is provided a process for producing a flexible foam sheet from a flexible foam block comprising the steps of:
forming at least one cut in a first wall of the flexible foam block, the at least one cut extending from the first wall toward a second wall, the second wall being generally opposite the first wall;
forming at least one cut in the second wall of the flexible foam block, the at least one cut extending from the second wall toward the first wall;
thereby forming a continuous flexible foam sheet.

All of the features contained here may be combined with any of the above aspects in any combination.

For a better understanding of the invention, and to show how embodiments of the same may be carried into effect, reference will now be made, by way of example, to the accompanying diagrammatic drawings in which:
Figure 1 shows a sectional view of a flexible foam block;
Figure 2 shows a sectional view of a flexible foam block, during the flexible foam sheet producing process;
Figure 3 shows a sectional view of a folded flexible foam sheet created by the flexible foam sheet producing process;
Figure 4 shows a sectional view of a partially unfolded flexible foam sheet;
Figure 5 shows a plan view of a portion of the flexible foam sheet in a fully unfolded configuration; and
Figure 6 shows a sectional view of the flexible foam sheet in a rolled configuration.

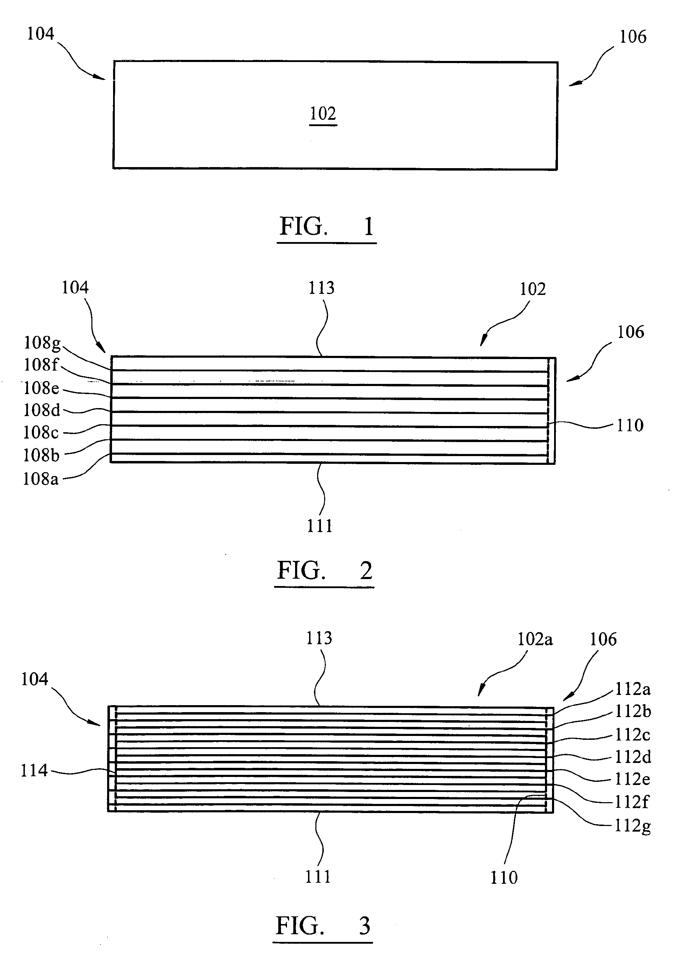

Referring to figure 1 there is shown a flexible foam block 102. The block 102 is formed of latex foam and is cuboidal in shape. The block 102 has a first wall 104 and a second wall 106, the second wall 106 being generally opposite the first wall 104.

Figure 2 shows the flexible foam block 102 during the flexible foam sheet making process. A number of cuts 108a-g have been made in the first wall 104 extending toward the second wall 106, but terminating just before the second wall 106 at the dashed line 110. In the example shown in the figures, the cuts 108a-g terminate about 5mm short of the second wall 106.

The cuts 108a-g are made using a Computer controlled profile cutting machine. The particular machine used was an OFS-HE CNC machine made by Albrecht Bäumer GmbH & Co.Kg, Asdorfer Strasse 96-106, D-57258 FREUDENBERG, GERMANY and was fitted with a 10775mm x 3mm x 0.6mm x 24 point diamond tooth DBSE (DBSE Double Bevelled Single Edge) continuous blade. However, it will be appreciated by one skilled in the art that any cutting device or machine capable of forming accurate straight cuts in flexible foam may be used.

The cuts 108a-g are labelled chronologically, that is, cut 108a is formed first, then cut 108b etc. Therefore, the cutting blade, which will be explained in more detail below, moves up the first wall 104 of the foam block 102.

The first cut 108a is situated 10mm from a base 111 of the block 102 and extends parallel with the base 111 toward the second wall 106. The further cuts 108b-g are each spaced 20mm from the cut directly below. Thus cut 108b is 20mm above cut 108a (and therefore 30mm from the base 111) and cut 108c is 20mm above cut 108b (and therefore 50mm from the base 111) etc. In the present example, the foam block is 150mm deep (ie. the height of the first and second walls 104, 106 from the base 111 to an upper surface 113 is 150mm) and thus between the uppermost cut 108g and the upper surface 113 of the block 102 is 20mm of the block 102.

The cuts 108a-g are substantially parallel with each other and co-extensive.

Having made the final cut 108g in the first wall, the blade (not shown) moves over the top of the block 102 (over the upper surface 113) toward the second wall. If the block 102 is of the correct size, then the blade may simply move over the upper surface 113 without touching it. However, if the block 102 is not the required size or if it has an uneven upper surface, for example, the blade (not shown) may contact the upper surface 113 to make it regular, or form the upper surface 113 by cutting away excess material. The blade then aligns itself adjacent the second wall 106 before commencing to form further cuts 112a-g as shown in figure 3.

It is possible that the cutting machine may rotate the blade through 90° and then cut the wall 106 square or to a correct length before starting to form the cuts 112a-g.

As with figure 2, the cuts 112a-g are labelled chronologically, thus 112a (the uppermost cut) is made first, followed by 112b directly below 112a etc. The cuts 112a-g extend from the second wall 106 toward the first wall 104, but terminate short thereof at the dotted line 114 shown in figure 3. The dotted line 114 is 5mm short of the first wall 104, thus the cuts 112a-g terminate 5mm before the first wall 104.

The first cut in the second wall 112a is formed 10mm down the wall 106 from the upper surface 113. The remaining cuts 112b-g are each spaced 20mm from each other. For example, cut 112b is 20mm below cut 112a (thus 30mm from the upper surface 113) and the third cut 112c is 20mm below cut 112b (thus 50mm from the upper surface 113) etc. In this manner, the cuts 112a-g into the second wall 106 are interspersed between the cuts 108a-g in the first wall. Furthermore, the cuts 112a-g and the cuts 108a-g combine to provide a cut every 10mm from alternating walls. The cuts 112a-g having been made, the block 102 may now be referred to as a flexible foam sheet 102a in a folded configuration. The foam sheet 102a is folded in a concertina fashion having 15 layers.

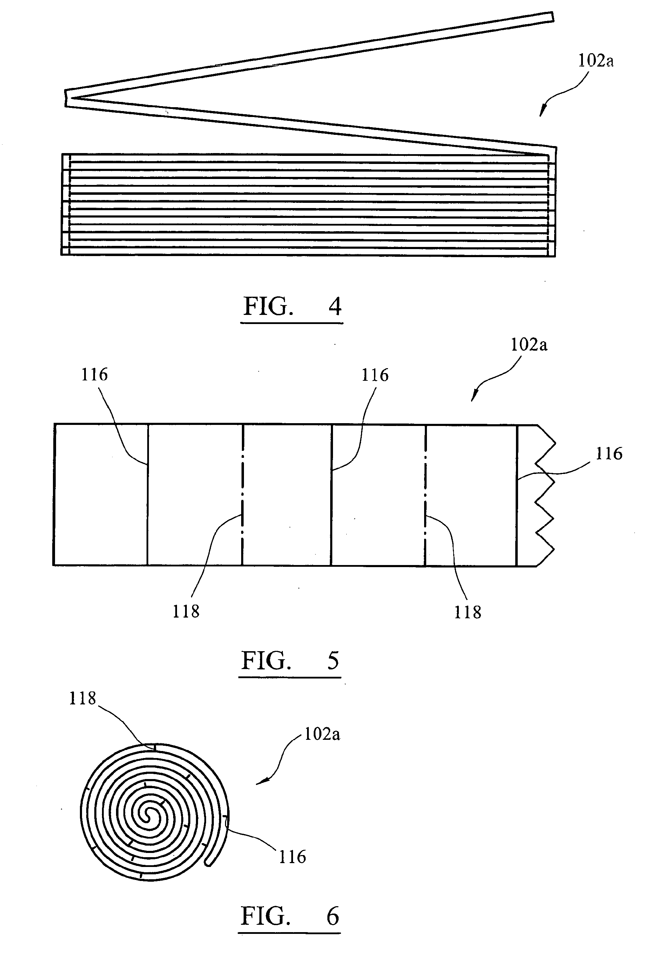

Referring now to figure 4 there is shown the flexible foam sheet 102a in a partially unfolded configuration in which a top layer has been lifted and a second layer, being joined at an end thereof to the top layer, is also lifted.

Figure 5 shows a plan view of the flexible foam sheet 102a in an unfolded configuration. The sheet 102a has fold lines 116, 118 across its width at regular intervals. The fold lines 116, 118 correspond to the termination of cuts 108a-g and 112a-g (and therefore correspond to points on the lines 110, 114 of figures 2 and 3), where the foam sheet 102a is folded over. Fold lines 116 represent a gap in the material extending from an upper surface of the sheet toward a lower surface, whereas fold lines 118 (shown by the dotted and dashed lines) represent a gap in the material extending from the lower surface up toward the upper surface.

The gaps are potentially weak points in the sheet and, in order to alleviate this, glue may be provided in the gaps of the sheet 102a. Glue, if used, need not extend the full length of the gaps, but may be used for example only at the ends of the gaps. This glue may then be over coated with an anti stick compound, such as silicone, to allow the sheet 102a to be rolled without the risk that the glue sticks to adjacent foam layers. The glue used is a "quick grab" glue, ie. a good degree of bond strength is obtained almost immediately after application. For this reason, solvent based glues (rather than water) are preferred. It is also important that the glue is a "soft bond" glue, ie. when set, it is soft. It is also preferred that the glue is "non-pinking", which in this context means that it is elastically deformable (returns to its previous shape upon release of pressure). An example of a preferred glue is a polychloroprene adhesive in a methyl chloride solvent, such as "XP2542" supplied by Chemique Adhesives and Sealants Ltd, Unit 21, Empire Close, ALDRIDGE, West Midlands. WS9 8UR. However, any adhesive which fulfils the above requirements could be used, for example an aerosol spray can of adhesive.

A roll of flexible foam sheet 102a is shown in figure 6 having fold lines 116, 118.

Advantageously, the flexible foam sheet may be rolled then compressed before packaging (thus removing air from the flexible foam) to reduce the volume occupied by the foam sheet prior to shipping.

A flexible foam sheet made in accordance with the present invention requires a small space to produce and results in very little wastage of the flexible foam block.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A process for producing a flexible foam sheet from a flexible foam block comprising the steps of:
forming at least one cut in a first wall of the flexible foam block, the at least one cut extending from the first wall toward a second wall, the second wall being generally opposite the first wall;
forming at least one cut in the second wall of the flexible foam block, the at least one cut extending from the second wall toward the first wall;
thereby forming a concertina of flexible foam sheet.

2. A process according to claim 1, wherein the at least one cut in the first wall and the at least one cut in the second wall are substantially parallel with each other.

3. A process according to either of claim 1 or claim 2, wherein the flexible foam block is a parallelepiped.

4. A process according to any preceding claim, wherein the process comprises forming a plurality of cuts into the first wall of the flexible foam block.

5. A process according to any preceding claim, wherein the process comprises forming a plurality of cuts into the second wall of the flexible foam block.

6. A process according to claim 5, wherein the plurality of cuts in the first wall are interspersed between the plurality of cuts in the second wall.

7. A process according to any of claims 4 to 6, wherein the plurality of cuts in the first wall are generally parallel with each other.

8. A process according to any of claim 5 to 7, wherein the plurality of cuts in the second wall are generally parallel with each other.

9. A process according to any of claims 5 to 8, wherein the plurality of cuts in the first wall and the plurality of cuts in the second wall are generally parallel with each other.

10. A process according to any preceding claim, wherein the at least one cut in the first wall is generally perpendicular with the first wall.

11. A process according to any preceding claim, wherein the at least one cut in the second wall is generally perpendicular with the second wall.

12. A process according to any preceding claim, wherein the at least one cut in the first wall extends more than 50% toward the second wall.

13. A process according to any preceding claim, wherein the at least one cut in the second wall extends more than 50% toward the first wall.

14. A process according to any preceding claim, wherein the at least one cut in the first wall terminates between about 1mm and 20mm before the second wall.

15. A process according to any preceding claim, wherein the at least one cut in the second wall terminates between about 1mm and 20mm before the first wall.

16. A process according to any preceding claim, wherein the flexible foam is selected from flexible polyurethane foam and latex foam.

17. A flexible foam sheet, the flexible foam sheet being produced from a flexible foam block by the following process steps:
forming at least one cut in a first wall of the flexible foam block, the at least one cut extending from the first wall toward a second wall, the second wall being generally opposite the first wall;
forming at least one cut in the second wall of the flexible foam block, the at least one cut extending from the second wall toward the first wall;
thereby forming a concertina of flexible foam sheet.

18. A roll of flexible foam sheet, the flexible foam sheet being produced from a flexible foam block by the following process steps:
forming at least one cut in a first wall of the flexible foam block, the at least one cut extending from the first wall toward a second wall, the second wall being generally opposite the first wall;
forming at least one cut in the second wall of the flexible foam block, the at least one cut extending from the second wall toward the first wall;
thereby forming a concertina of flexible foam sheet and then manipulating the flexible foam sheet into a roll.

19. Use of a flexible foam block to form a flexible foam sheet by the following process steps:
forming at least one cut in a first wall of the flexible foam block, the at least one cut extending from the first wall toward a second wall, the second wall being generally opposite the first wall;
forming at least one cut in the second wall of the flexible foam block, the at least one cut extending from the second wall toward the first wall;
thereby forming a concertina of flexible foam sheet.
